Europäisches Patentamt

European Patent Office

Office européen des brevets

(11) Publication number: **0 004 185**
A1

# (12) EUROPEAN PATENT APPLICATION

(21) Application number: 79300348.4

(22) Date of filing: 07.03.79

(51) Int. Cl.²: **B 21 K 1/70**
F 16 B 37/00

(30) Priority: 09.03.78 GB 942078

(43) Date of publication of application:
19 09.79 Bulletin 79/19

(84) Designated contracting states:
BE DE FR GB IT NL SE

(71) Applicant: TUNGSTONE BATTERIES LTD.

Market Harborough Leicestershire LE16 9EZ (GB)

(72) Inventor: Evans, Glyn Sutton
60, Fairfax Road
Market Harborough Leicestershire (GB)

(74) Representative: Richards, David John et al,
Page, White & Farrer 27, Chancery Lane
London, WC2A 1NT (GB)

(54) Improved method of making a nut with a captive washer, and a nut made by the method.

(57) The invention relates to a method of making a nut with a captive, freely rotatable washer, of the kind which is commonly used for securing a wheel to a commercial vehicle.

In the method according to the invention, the nut and washer are formed integrally from a single blank (4) preferably by forging, and are then at least partially separated by a metal removing operation (such as machining) which leaves a web of material (8) which, when the nut and washer are fully separated, is used to retain the washer (10) and nut (9) together in the desired, freely rotatable condition.

The method of the invention is simpler and less expensive than known methods and produces a nut and captive washer having true bearing surfaces.

Fig.4.

EP 0 004 185 A1

## IMPROVED METHOD OF MAKING A NUT WITH A CAPTIVE WASHER, AND A NUT MADE BY THE METHOD

The present invention relates to a method of making a nut with a captive freely rotatable washer, and to a nut made by this method.

Nuts of this type, having captive but freely rotatable washers, are commonly used to secure wheels to vehicles where the wheel centre bore is located on a hub spigot to provide a concentric assembly, and the wheel nuts are used simply to secure the wheel to studs on the wheel hub, but not to centre the wheel. Whilst the nut is tightened, the washer remains stationary on the wheel nave, thus substantially eliminating friction between the washer and the wheel and enabling a controlled tightening of the nut with less effort. Furthermore, the tightening load is spread by the washer over a greater area than if the nut alone were used, and if the washer has a generally conical shape, inaccuracies between the mating surfaces of the washer and the wheel can be compensated.

In a conventional method of making nuts having captive washers, the nuts and the washers are made separately and are then assembled together by fitting the washer over an integral annular flange or neck which extends from one end face of the nut; this flange is then deformed around the inner periphery of the washer to rivet the two parts loosely together. This known method does have certain disadvantages. The separate production and subsequent assembly of the nut and washer is a relatively involved procedure compared to the production of ordinary nuts, and the finished product is as a result comparatively expensive. Furthermore, as the bearing surfaces of the nut and the washer are not always "in true", unless a washer of either a different material or of a different hardness to that of the nut is used, local friction welding of the two parts can occur when the nut is tightened.

The invention provides a method of making a nut of the kind described which is simpler and less expensive to carry out than known methods and which is capable of producing a nut and captive washer which have true bearing surfaces.

In a method according to the present invention, the nut and washer are formed integrally from a single blank and are then at least partially separated by a metal removing operation which leaves a web of material on one or both parts which, when the nut and washer are fully separated, is used to retain the washer and the nut together in the desired freely rotatable condition.

By using a method in which the nut and washer are formed integrally from the same blank, the two parts can be formed simultaneously in the same shaping operation and very little material is wasted. In addition, as the bearing surfaces are formed during the metal removing operation, these bearing surfaces can be made true.

The metal removing operation is suitably a machining operation, and the nut and washer are preferably formed integrally from the blank by forging.

The web of material left after the metal removing operation is preferably an annular web of material connected to the nut, but the web may have any suitable configuration (for example it may be discontinuous) and it may be connected to either the nut or the washer, or to both.

In a preferred embodiment, the method comprises the steps of shaping a generally sleeved shaped blank to form a nut part at one end and a washer part at the other, and removing a circumferential ring of material from the exterior of the blank at a position intermediate the ends of the blank to leave a web of material between the two parts, separating the nut from the washer by fracturing the material along the join between the web and the washer, pushing the washer towards the nut to surround the web, and deforming the web radially outwardly so as to capture the washer against the nut in a freely rotatable condition.

Preferably, this embodiment of the method further comprises the step of removing a ring of material from the bore of the washer so that the join between the web and the washer is more readily frangible.

The invention also provides a nut having a captive freely rotatable washer whenever made by a method according to the invention.

An embodiment of the present invention will now be described, by way of example only, with reference to the accompanying drawings, in which:-

Fig. 1 shows an elevational view, partly in section of a conventional nut and washer before assembly,

Fig. 2 shows an elevation partly in section of the conventional nut and washer shown in Fig. 1, after assembly,

Fig. 3 shows an elevation, partly in section, of a cylindrical blank used in the method of the invention, and

Fig. 4 shows an axial section through a nut and washer being formed by a method in accordance with the invention, the left-hand half of the Figure showing the blank at an intermediate stage in the method and the right-hand half showing the finished assembly.

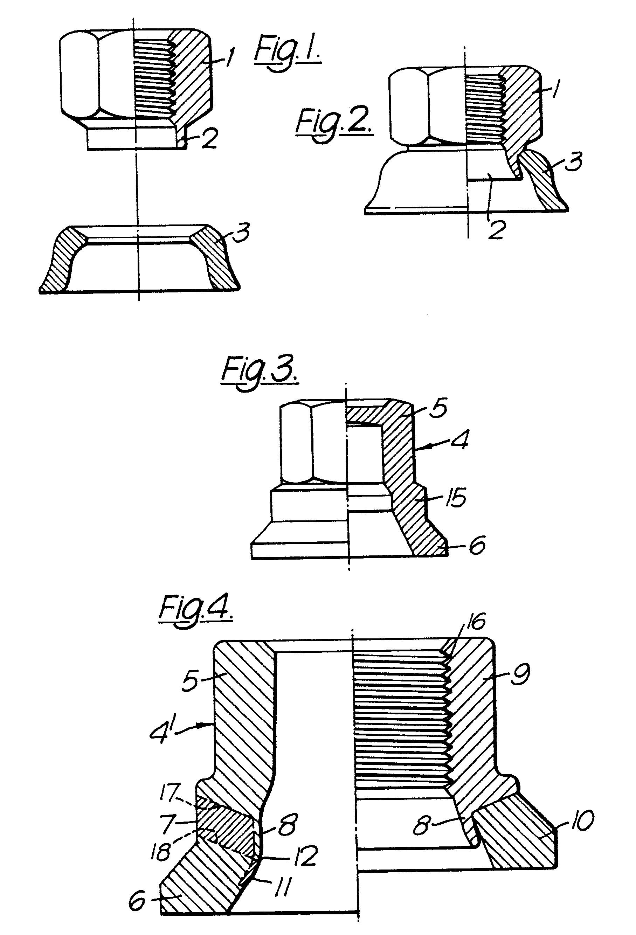

Referring to the drawings, Fig. 1 shows a conventional wheel nut 1 which is provided with a cylindrical flange or neck 2 used for connecting the nut to a conical washer 3. The nut and the washer are first formed separately (for example by hot, warm or cold forging) and the nut blank is then pierced and tapped. The washer is then made captive on the nut by slipping it over the flange 2, and the flange is then deformed radially outwardly at its free end to retain the washer over the nut as shown in Fig. 2. The washer 3 is only loosely held around the flange 2 to allow the washer to rotate freely with respect to the nut 1. As the mating surfaces between the washer and the nut are not generally true when the two parts are made by this method, it is usual to form the washer from a material which is harder than the nut 1, or to subject the washer 3 to a hardening treatment prior to assembling the parts together. This avoids friction welding of the two parts during tightening.

In the method according to the invention, the nut and the washer are made simultaneously from the same blank. Fig. 3 shows a stepped cylindrical blank 4 which is used at an intermediate stage in the method according to the invention. This blank 4 is produced in a two-stage forging operation in which first the external shape having smaller diameter end 5, intermediate collar 15 and larger diameter end 6 is formed, and then the internal shape shown is produced. At either stage in the forging operation the smaller diameter end 5 may be given a hexagonal shape as shown. The forming operation used to produce the blank 4 is a conventional hot, warm or cold forging process.

The blank 4 is then pierced to produce the blank 4' in the left-hand side of Fig. 4, and is then subsequently tapped to provide the internal thread 16 ( which is omitted from this part of the Figure for clarity).

It will be appreciated that these forming and shaping steps can be re-arranged to suit the particular type of operation employed; for example, the hexagonal shaping of the blank may be carried out in the third stage, at which the blank is also pierced simultaneously and then tapped to provide the internal thread.

The blank 4' is then subjected to a machining operation in which an annular portion 7 is removed from the intermediate collar 15 to leave a thin annular web 8 joining the end portions 5 and 6 together. The tool used in the machining operation leaves parallel, equally-inclined bearing surfaces 17 and 18 respectively on the end portions 5 and 6. These end portions 5 and 6 form respectively the hexagonal nut 9 and the annular washer 10 shown in Fig. 4.

In addition to the portion 7 being machined, an annular ring 11 may be removed from the bore of the end portion 6, but this is not essential.

The join 12 between the web 8 and the washer portion 6 is then fractured to separate the washer 10 completely from the nut 9, and the washer 10 is then pushed axially over the web 8 until it abuts the lower surface of the nut 9. The web 8 is then deformed radially outwardly to assemble the nut and the washer together, retaining the washer rotatably on the nut as shown on the right of Fig. 4. The fracturing and assembly steps may be carried out in a single pressing operation (for example over a conical lower die) which also forms the web 8 into its washer-retaining shape, as shown on the right of Fig. 4.

Machining away the ring portion 11 assists in the separation of the washer from the nut, and it will be appreciated that if desired, this portion can be removed to a depth which completely separates the lower part 6 from the web 8. This eliminates the need for a fracturing stage.

The operations of tapping, machining and pressing may if desired be carried out on more than one machine, but preferably a single machine is used.

Machining the blank 4 results in a nut and washer pair which are provided with true bearing surfaces which will fit together with negligible rough areas which could become welded during tightening. In addition, the manufacture of the nut and washer from a single blank has significant advantages in terms of cost over the known methods where separate parts are produced, and a more rapid production of the assemblies is possible using the method according to the invention.

For certain applications, differing properties e.g. hardness value may be required between the nut and the washer, in which case selective treatment e.g. hardening, of one or both of the nut and washer assembly may be carried out at any stage in the process, for example at the stage shown in the left of Fig. 4, with the portion 7 and portion 11 removed if desired.

While the process described in connection with Figs. 3 and 4 results in a nut and washer which have parallel, equally inclined bearing surfaces, it may be desirable to form these bearing surfaces in any other matching configuration; for example they may be spherical or part-spherical.

Claims :-

1.    A method of making a nut having a captive, freely rotatable washer, comprising forming the nut and the washer integrally from a single blank, and subjecting the blank to a metal removing operation which at least partially separates the washer part from the nut part and which leaves a web of material on one or both parts which, when the nut and washer are fully separated, is used to retain the washer and the nut together in the desired freely rotatable condition.

2.    A method as claimed in Claim 1, wherein the metal removing operation only partially separates the nut part from the washer part, and the method includes the step of fully separating these parts by fracturing the material of the blank along the join between the two parts.

3.    A method as claimed in Claim 1 or Claim 2, wherein the web of material left after the metal removing operation comprises an annular neck formed on the nut part, and the method includes the step of deforming this neck radially outwardly after separation of the two parts to retain the nut and washer together in the desired freely rotatable condition.

4.    A method as claimed in Claim 1, comprising the steps of shaping a generally cylindrical blank to form a nut part at one end and a washer part at the other, subjecting the blank to said metal removing operation so as to remove a circumferential ring of material from the exterior of the blank at a position intermediate the ends thereof to leave a web of material between the two parts, separating the nut part from the washer part along the join between the web and the washer, moving the nut and the washer together so that the washer surrounds the web, and deforming the web radially outwardly so as to capture the washer against the nut in a freely rotatable condition.

5. A method as claimed in Claim 4, further comprising the step of removing a ring of material from the bore of the washer part to facilitate separation of the two parts.

6. A method as claimed in Claim 4 or Claim 5, wherein the nut part is separated from the washer part by fracturing the material along the join between the web and the washer.

7. A method as claimed in Claim 6, wherein the steps of separating the two parts by fracturing the material along the join between web and washer, moving the nut and the washer together, and deforming the web radially outwardly, are carried out in a single operation.

8. A method as claimed in any of Claims 1 to 7, wherein the metal removing operation is a machining operation which forms matching bearing faces on the adjacent surfaces of the nut and washer.

9. A method as claimed in any of Claims 1 to 8, wherein the nut and washer are formed integrally from the blank by forging.

10. A method of making a nut having a captive, freely rotatable washer, substantially as hereinbefore described with reference to Figs. 3 and 4 of the accompanying drawings.

11. A nut having a captive, freely rotatable washer, whenever made by the method as claimed in any one of Claims 1 to 10.

1/1

0004185

Fig. 1.

Fig. 2.

Fig. 3.

Fig. 4.

## European Patent Office

## EUROPEAN SEARCH REPORT

Application number

EP 79 30 0348

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | US - A - 2 520 259 (PUMMILL) <br> * The whole document * <br><br> -- | 1-8, 10,11 | B 21 K 1/70 <br> F 16 B 37/00 |
| X | US - A - 2 380 994 (PUMMILL) <br> * Page 1, right-hand column, lines 32-43; claim 1; figures 1,2,3 * <br><br> -- | 1,2,5, 6,8 | |
| A | FR - A - 2 177 378 (NEUMAYER) <br> * Claim; figures * <br><br> -- | 1,11 | TECHNICAL FIELDS SEARCHED (Int.Cl.³) <br><br> B 21 K <br> F 16 B |
| A | GB - A - 634 081 (ELASTIC STOP NUT) <br> * Figures * <br><br> -- | 1,11 | |
| A | US - A - 3 141 182 (LANIUS) <br> * Figures 5,6,7 * <br><br> ---- | 1,11 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-06-1979 | THE |

EPO Form 1503.1 06.78